# EUROPÄISCHE PATENTSCHRIFT

(11) **EP 1 639 268 B1**
(45) Veröffentlichungstag und Bekanntmachung des Hinweises auf die Patenterteilung: **11.08.2010**
(21) Anmeldenummer: 04741887.6
(22) Anmeldetag: 24.06.2004
(51) Int. Cl.: F16D 55/40, F16D 59/02, F16D 65/14

(54) **BREMSANORDNUNG, INSBESONDERE FÜR EINEN HYDRAULISCHEN RADANTRIEB**
BRAKE ASSEMBLY, PARTICULARLY FOR A HYDRAULIC WHEEL DRIVE
ENSEMBLE FREIN, EN PARTICULIER POUR ENTRAINEMENT DE ROUE HYDRAULIQUE

(30) Priorität: 27.06.2003 DE 10329047
(43) Veröffentlichungstag der Anmeldung: 29.03.2006
(73) Patentinhaber: Lohmann & Stolterfoht GmbH, 58455 Witten (DE)
(72) Erfinder: GRIMM, Raimund, 58640 Iserlohn (DE); LANGENBECK, Bernhard, 44267 Dortmund (DE)
(74) Vertreter: Maiwald Patentanwalts GmbH
(86) Internationale Anmeldenummer: PCT/EP2004/051232
(87) Internationale Veröffentlichungsnummer: WO 2005/001304

(56) Entgegenhaltungen:
- EP-A- 1 072 814
- EP-A- 1 167 140
- DE-A- 19 857 962
- US-A- 4 723 636

## Beschreibung

Die vorliegende Erfindung betrifft eine Bremsenanordnung, insbesondere für einen hydraulischen Radantrieb, mit einem aus mehreren Außenlamellen und korrespondierenden Innenlamellen gebildeten Lamellenpaket, welches über eine Kolbenanordnung zum Bremsen zusammenpressbar ist, wobei ein erster Hydraulikkreis zur Betriebsbremsung auf die Kolbenanordnung einwirkt und ein zweiter Hydraulikkreis zur Parkbremsung auf die Kolbenanordnung einwirkt.

Das Einsatzgebiet der vorliegenden Erfindung erstreckt sich vornehmlich auf die Landmaschinentechnik. Landwirtschaftliche Fahrzeuge sind oftmals mit Radantrieben ausgestattet, welche aus einem Hydraulikmotor als Antriebseinheit bestehen, dem ein kompakt bauendes Planetengetriebe als Getriebestufe nachgeschaltet ist, dessen Hohlrad direkt mit der Radnabe in Verbindung steht. Ein mit einem solchen Radantrieb ausgestattetes Fahrzeug besitzt zum einen eine sogenannte dynamische Bremse, welche als Betriebsbremse es dem Fahrer während der Fahrt ermöglicht, das Fahrzeug abzubremsen oder zum Stillstand zu bringen. Daneben ist eine statische Bremse erforderlich, welche als Parkbremse eingesetzt wird, um das Fahrzeug im Stillstand zu sichern.

Aus der EP 1 167 140 A2 der Anmelderin geht ein derartiger Radantrieb hervor, in welchem sowohl eine Betriebsbremse als auch eine Parkbremse integriert sind. Die Parkbremse ist hier antriebsseitig des Planetengetriebes vorgesehen und wirkt zwischen einer ortsfesten Tragachse einerseits sowie der Sonnenradwelle des Planetengetriebes andererseits. Dagegen ist die Betriebsbremse abtriebsseitig des Planetengetriebes angeordnet und wirkt zwischen dem auch als Radnabe dienenden Hohlrad einerseits sowie der entsprechend verlängerten Tragachse andererseits. Beide Bremsen werden von je einem Hydraulikkreis betrieben und bestehen im wesentlichen aus je einem Lamellenpaket, welches im Falle der Parkbremse über eine Druckfeder und im Falle der Betriebsbremse über Druckmittel betätigt werden. Insbesondere wegen der beiden Lamellenpakete mit jeweils zugeordneten Betätigungsmitteln erfordert die Integration einer Betriebsbremse sowie einer Parkbremse in den Radantrieb einen erheblichen Platzbedarf.

Aus der EP 0 913 304 A2 geht ein Radantrieb hervor, bei dem dieser Nachteil dadurch behoben ist, in dem sowohl für die Betriebsbremse als auch für die Parkbremse ein gemeinsames Lamellenpaket vorgesehen ist. Das Lamellenpaket wird über einen separaten Hydraulikkreislauf für die Betriebsbremse sowie über einen weiteren, getrennt hiervon ausgeführten Hydraulikkreislauf für die Parkbremse betätigt. Allerdings wirken beide Hydraulikkreisläufe auf ein und den selben Kolben zum Zusammenpressen des Lamellenpakets zwecks Bremsung ein.

Von Nachteil bei dieser Lösung ist, dass eine derartige gemeinsame Betätigung des einzigen Bremskolben sicherheitstechnisch bedenklich ist, da hierbei auf eine Systemredundanz weitgehend verzichtet wird. Bei Ausfall des gemeinsamen Bremskolbens ist die Funktion der Bremse nicht mehr gewährleistet, selbst wenn diese über den anderen Hydraulikkreislauf angesteuert werden sollte. Außerdem ist gemäß gesetzlicher Bestimmungen in vielen Ländern eine Parkbremse ohne Federbetätigung unzulässig.

Aus EP 1 072 814 A1 geht eine gattungsgemäße Bremsenanordnung hervor. Diese besitzt eine Kolbenanordnung mit einem mit dem Lamellenpaket zum Bremsen in Kontakt stehenden und von einem ersten Hydraulikkreis beaufschlagten Betriebskolben, der wiederum von einem benachbarten und stirnseitig hieran zur Anlage kommenden separaten Parkbremskolben beaufschlagt ist, welcher über einen zweiten Hydraulikkreis aktivierbar ist. Beide Bremskolben sind ringförmig ausgebildet und im Prinzip in Axialrichtung gesehen nacheinander angeordnet. Diese Kolbenanordnung ist daher in Axial- sowie auch in Radialrichtung recht großbauend.

Es ist daher die Aufgabe der vorliegenden Erfindung eine Bremsenanordnung, insbesondere für einen hydraulischen Radantrieb zu schaffen, welche unter minimalem Bauteilaufwand und kompaktbauend sowohl eine Betriebsbremse als auch eine Parkbremse beinhaltet, wobei ein weitgehend redundantes Bauprinzip verwirklicht ist.

Dieser Aufgabe wird ausgehend von einer Bremsenanordnung gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die ein gemeinsames Lamellenpaket betätigende Kolbenanordnung einen mit dem Lamellenpaket in Kontakt stehenden und von einem ersten Hydraulikkreis beaufschlagten Betriebsbremskolben umfasst, der wiederum von einem benachbarten und mit dem zweiten Hydraulikkreis zusammenwirkenden separaten Parkbremskolben beaufschlagbar ist.

Betriebsbremse sowie eine Parkbremse verwirklicht sind, welche separat über eigene Hydraulikkreise ansteuerbar sind. Durch die Nutzung eines gemeinsam Lamellenpaketes und die spezielle Kolbenanordnung ergibt sich insgesamt eine bauraumsparende Konstruktion unter Beibehaltung der Funktionssicherheit der Bremsen.

Vorzugsweise ist der Parkbremskolben der Kolbenanordnung ringförmig ausgebildet und koaxial zur ebenfalls ringförmig ausgebildeten Betriebsbremskolben angeordnet. Insbesondere bei einer Anwendung als Radantrieb, bei welchem das Getriebe nach Art eines Planetengetriebes ausgebildet ist, erweist sich ein derartige ringförmige Ausbildung der Kolbenanordnung als besonders platzsparend.

Gemäß einer weiteren die Erfindung verbessernde Maßnahme wird vorgeschlagen, dass der Parkbremskolben auf dem Außenumfang des Betriebsbremskolbens angeordnet ist und in Axialrichtung des Lamellenpakets an einem außenradialen Absatz des Betriebsbremskolbens zur Anlage kommt, um die Parkbremskraft auf den Betriebsbremskolben zu übertragen. Dabei braucht die durch den Absatz gebildete Wirkfläche des Betriebsbremskolbens nicht besonders groß auszufallen. Berechnungen haben ergeben, dass ein bereits relativ kleiner Absatz eine genügend große Ringfläche als Wirkfläche für den Betriebsbremskolben liefert, da der Betriebsbremskolben über einen relativ großen Durchmesser verfügt. Somit dient der Absatz des Betriebsbremskolbens einerseits als Anlage zur Kraftübertragung der Parkbremskraft, ausgehend vom Parkbremskolben über den Betriebsbremskolben zum Lamellenpaket. Andererseits bildet der Absatz auch die Wirkfläche des Betriebsbremskolbens.

Die durch den Absatz gebildete Wirkfläche des Betriebsbremskolbens wird vorzugsweise über eine durch den Parkbremskolben verlaufende Radialbohrung mit dem Bremsdruck, d. h. dem Druckmittel, aus dem ersten Hydraulikkreis versorgt. Entsprechende Radialdichtungen seitens des Betriebsbremskolbens sowie des Parkbremskolbens sind vorzusehen.

Der Parkbremskolben wird dagegen vorzugsweise über mindestens eine Druckfeder betätigt und über das Druckmittel des zweiten Hydraulikkreises rückgestellt. Über die Betätigung mittels Druckfedern wird die Sicherheitsfunktion gewährleistet, das bei Ausfall der Hydraulikkreise die Parkbremse selbsttätig auslöst. Darüber hinaus braucht bei längerem Stillstand des Fahrzeuges kein Druck in den Hydraulikkreisen bestehen zu bleiben, um das Fahrzeug sicher in der Parkposition zu halten.

Der Betriebsbremskolben ist wie bereits vorstehend beschrieben, über das Druckmittel des ersten Hydraulikkreises betätigbar und wird über mindestens eine Druckfeder rückgestellt. Liegt somit kein Bremsdruck an dem Betriebsbremskolben an, so gelangt dieser in seine nicht betätigte Ausgangsposition, d. h. das Lamellenpaket ist entspannt, falls dieses nicht über die Druckfedern der Parkbremse beaufschlagbar ist.

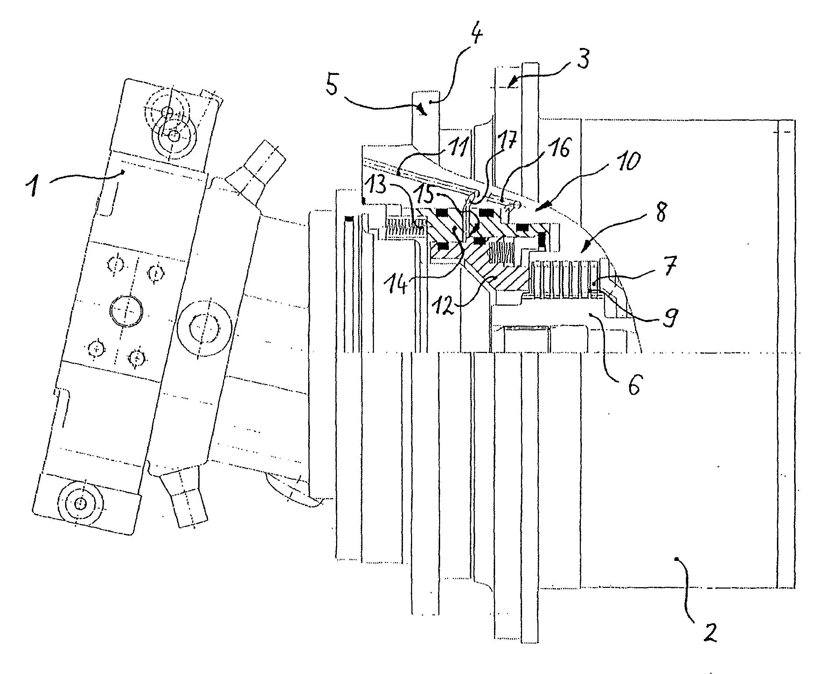

Weitere die Erfindung verbessernde Maßnahmen werden nachstehend gemeinsam mit der Beschreibung eines bevorzugten Ausführungsbeispiels der Erfindung, anhand der einzigen Figur näher dargestellt.

Die Figur zeigt einen teilweisen Längsschnitt durch ein mit einer Bremsenanordnung ausgestatteten hydraulischen Radantrieb.

Der Radantrieb ist im wesentlichen aus einem Hydraulikmotor (1) aufgebaut, welcher an ein Planetengetriebe (2) angeflanscht ist, an dessen Gehäuse Bohrungen (3) zur Befestigung eines - hier nicht weiter dargestellten - Fahrzeugrades vorgesehen sind. Der Radantrieb umfasst weiterhin eine Tragachse (4), über deren außenradialen Bohrungen (5) der gesamte Radantrieb an das - hier nicht weiter dargestellt - Fahrzeug anbringbar ist.

Antriebsseitig des Planetengetriebes (2) sind auf einer mit dem Hydraulikmotor (1) zusammenwirkenden Mitnehmerwelle (6), Innenlamellen (7) eines Lamellenpakets (8) angeordnet. Die Innenlamellen (7) wirken mit ortsfest zur Tragachse (4) angeordneten, dem gegenüber schmaler ausgebildeten Außenlamellen (9) des Lamellenpakets (8) zusammen.

Zum Bremsen ist das Lamellenpaket (8) über eine Kolbenanordnung (10) zusammenpressbar. Die Kolbenanordnung (10) besteht aus einem von einem ersten Hydraulikkreislauf (11) beaufschlagbaren Betriebsbremskolben (12) sowie einen durch mehrere, ringförmig angeordnete Druckfedern (13) beaufschlagbaren Parkbremskolben (14). Sowohl der Parkbremskolben (14) als auch der Betriebsbremskolben (12) sind ringförmig ausgebildet und umgeben einen Teil des durch sie hindurch ragende Hydraulikmotors (1). Der Parkbremskolben (14) ist auf dem Außenumfang des Betriebsbremskolbens (12) angeordnet. Der Parkbremskolben (14) kommt in Axialrichtung des Lamellenpakets (8) an einem außenradialen Absatz (15), welcher am Betriebsbremskolben (12) ausgebildet ist zur Anlage, um die durch die Druckfedern (13) erzeugte Parkbremskraft über den Betriebsbremskolben (12) an das Lamellenpaket (8) zu übertragen. Während des Betriebs des Hydraulikmotors (1), d. h. während der Fahrt des Fahrzeuges ist die Parkbremse über eine rückwärtige Druckmittelbeaufschlagung des Parkbremskolbens (14) durch den zweiten Hydraulikkreis (16) entgegen der Kraft der Druckfedern (13) außer Betrieb.

Der außenradiale Absatz (15) des Betriebsbremskolbens (12) bildet darüber hinaus auch die Wirkfläche des Betriebsbremskolbens (12), welche über eine Radialbohrung (17), die auch radial durch den Parkbremskolben (14) verläuft mit dem Bremsdruck beaufschlagt wird. Die Radialbohrung (17) ist Bestandteil des ersten Hydraulikkreises (11). Der Betriebsbremskolben (12) ist über mehrere entlang des Umfanges des ringförmigen Betriebsbremskolbens (12) angeordneten und gegen der Tragachse (4) sich abstützenden Druckfedern (18) rückstellbar.

### Bezugszeichenliste

- 1: Hydraulikmotor
- 2: Planetengetriebe
- 3: Bohrungen
- 4: Tragachse
- 5: Bohrungen
- 6: Mitnehmerwelle
- 7: Innenlamellen
- 8: Lamellenpaket
- 9: Außenlamellen
- 10: Kolbenanordnung
- 11: ersten Hydraulikkreis
- 12: Betriebsbremskolben
- 13: Druckfeder
- 14: Parkbremskolben
- 15: Absatz
- 16: zweiter Hydraulikkreis
- 17: Bohrung
- 18: Druckfeder

## Patentansprüche

1. Bremsenanordnung für einen hydraulischen Radantrieb mit einem aus mehreren Außenlamellen (9) und korrespondierenden Innenlamellen (7) gebildeten Lamellenpaket (8), welches über eine Kolbenanordnung (10) zum Bremsen zusammenpressbar ist, wobei ein erster Hydraulikkreis (11) zur Betriebsbremsung auf die Kolbenanordnung (10) einwirkt und ein zweiter Hydraulikkreis (16) zur Parkbremsung auf die Kolbenanordnung (10) einwirkt, welche einen mit dem Lamellenpaket (8) in Kontakt stehenden und vom ersten Hydraulikkreis (11) beaufschlagten Betriebsbremskolben (12) umfasst, der wiederum von einem benachbarten und mit dem zweiten Hydraulikkreis (16) zusammenwirkenden separaten Parkbremskolben (14) beaufschlagbar ist, der) ringförmig ausgebildet ist und koaxial zum ebenfalls ringförmig ausgebildeten Betriebsbremskolben (12) angeordnet ist,
**dadurch gekennzeichnet, dass** der Parkbremskolben (I4) auf dem Außenumfang des Betriebsbremskolbens (12) angeordnet ist und in Axialrichtung des Lamellenpakets (8) an einem außenradialen Absatz (15) des Betriebsbremskolbens (12) zur Anlage kommt, um die Parkbremskraft auf den Betriebsbremskolben (12) zu übertragen.

2. Bremsenanordnung gemäß Anspruch 1,
**dadurch gekennzeichnet, dass** der Absatz (15) daneben auch die Wirkfläche des Betriebsbremskolbens (12) bildet, welche über eine Radialbohrung (17) im Parkbremskolben (14) mit dem Bremsdruck beaufschlagbar ist.

3. Bremsenanordnung gemäß Anspruch 1,
**dadurch gekennzeichnet, dass** der Parkbremskolben (14) über mindestens eine Druckfeder (13) betätigbar ist und über das Druckmittel des zweiten Hydraulikkreises (16) rückstellbar ist.

4. Bremsenanordnung gemäß Anspruch 1,
**dadurch gekennzeichnet, dass** der Betriebsbremskolben (12) über Druckmittel des ersten Hydraulikkreises (11) betätigbar ist und über mindestens eine Druckfeder (18) rückstellbar ist.

5. Bremsenanordnung gemäß Anspruch 1,
**dadurch gekennzeichnet, dass** das Lamellenpaket (8) antriebsseitig innerhalb eines Planetengetriebes (2) angeordnet ist.

6. Bremsenanordnung gemäß Anspruch 4,
**dadurch gekennzeichnet, dass** eingangsseitig des Planetengetriebes (2) ein Hydraulikmotor (1) vorgesehen ist, der gemeinsam mit dem Planetengetriebe (2) einen Radantrieb bildet.

## Claims

1. A brake assembly for a hydraulic wheel drive, comprising a disc stack (8) formed of a plurality of outer discs (9) and corresponding inner discs (7), able to be pressed together for braking by means of a piston assembly (10), wherein, for service braking, a first hydraulic cycle (11) acts on the piston assembly (10) and, for parking braking, a second hydraulic cycle (16) acts on the piston assembly (10), which comprises a service brake piston (12) in contact with the disc stack (8) and has a pressure applied to it by the first hydraulic cycle (11), the service brake piston (12) in turn being able to have a pressure applied to it by an adjacent separate parking brake piston (14) cooperating with the second hydraulic cycle (16), the brake piston (14) having an annular configuration and being coaxially arranged with respect to the service brake piston (12), also annularly configured, **characterized in that** the parking brake piston (14) is arranged on the outer periphery of the service brake piston (12) and bears against an outer radial shoulder (15) of the service brake piston (12) in the axial direction of the disc stack (8) in order to transmit the parking brake force to the service brake piston (12).

2. The brake assembly according to claim 1,
**characterized in that** the shoulder (15) also forms the effective surface of the service brake piston (12), which can have the brake pressure applied to it through a radial bore (17) in the parking brake piston (14).

3. The brake assembly according to claim 1,
**characterized in that** the parking brake piston (14) is operable by means of at least one pressure spring (13) and resettable by means of the pressurized medium of the second hydraulic cycle (16).

4. The brake assembly according to claim 1,
**characterized in that** the service brake piston (12) is operable by means of a pressurized medium of the first hydraulic cycle (11) and is resettable by means of at least one pressure spring (18).

5. The brake assembly according to claim 1,
**characterized in that** the disc stack (8) on the drive side is arranged within a planetary gear set (2).

6. The brake assembly according to claim 4,
**characterized in that**, on the input side of the planetary gear set (2), a hydraulic motor (1) is provided, which, together with the planetary gear set (2), forms a wheel drive.

## Revendications

1. Agencement de freinage pour un entraînement de roue hydraulique comprenant un empilement de lamelles formé par plusieurs lamelles extérieures (9) et par des lamelles intérieures correspondantes (7), l'empilement pouvant être pressé en rapprochement via un agencement à piston (10) pour le freinage, de sorte qu'un premier circuit hydraulique (11) agit sur l'agencement à piston (10) pour le freinage de service et un second circuit hydraulique (16) agit sur l'agencement à piston (10) pour le freinage de stationnement, l'agencement à piston comprenant un piston de freinage de service (12) en contact avec l'empilement de lamelles (8) et alimenté par le premier circuit hydraulique, ce piston de freinage de service pouvant être attaqué à nouveau par un piston de freinage de stationnement (14) séparé voisin, coopérant avec le second circuit hydraulique (16), ce piston de freinage de stationnement (14) étant réalisé sous forme annulaire et agencé coaxialement au piston de freinage de service (12), également réalisé sous forme annulaire,
**caractérisé en ce que** le piston de freinage de stationnement (14) est agencé sur la périphérie extérieure du piston de freinage de service (12) et vient en contact en direction axiale de l'empilement de lamelles (8) contre un talon (15) radial extérieur du piston de freinage de service (12), afin de transmettre la force de freinage de stationnement au piston de freinage de service (12).

2. Agencement de freinage selon la revendication 1,
**caractérisé en ce que** le talon (15) forme en outre également la surface active du piston de freinage de service (12) qui peut être sollicitée par la pression de freinage via un perçage radial (17) dans le piston de freinage de stationnement (14).

3. Agencement de freinage selon la revendication 1,
**caractérisé en ce que** le piston de freinage de stationnement (14) est susceptible d'être actionné via au moins un ressort de compression (13) et est susceptible d'être rappelé via l'agent de pression du second circuit hydraulique (16).

4. Agencement de freinage selon la revendication 1,
**caractérisé en ce que** le piston de freinage de service (12) est susceptible d'être actionné via l'agent de pression du premier circuit hydraulique (11) et est susceptible d'être rappelé via au moins un ressort de compression (18).

5. Agencement de freinage selon la revendication 1,
**caractérisé en ce que** l'empilement de lamelles est agencé du côté entraînement à l'intérieur d'une transmission à planétaires (2).

6. Agencement de freinage selon la revendication 4,
**caractérisé en ce qu'**il est prévu du côté entrée de la transmission à planétaires (2) un moteur hydraulique (1) qui forme un entraînement de roue conjointement avec la transmission à planétaires (2).
